# EUROPEAN PATENT APPLICATION

(11) **EP 2 538 114 A2**
(43) Date of publication of application: **26.12.2012**
(21) Application number: 12172999.0
(22) Date of filing: 21.06.2012
(51) Int. Cl.: F16H 1/32, F16H 57/04

(54) **Speed reduction mechanism and motor torque transmission device including the speed reduction mechanism**

(30) Priority: 24.06.2011 JP 2011140613
(71) Applicant: JTEKT CORPORATION, Osaka-shi Osaka 542-8502 (JP)
(72) Inventor: Nomura, Keita, Osaka-shi, Osaka 542-8502 (JP); Suzuki, Kunihiko, Osaka-shi, Osaka 542-8502 (JP); Takai, Tomoyoshi, Osaka-shi, Osaka 542-8502 (JP); Kobayashi, Tsune, Osaka-shi, Osaka 542-8502 (JP); Onozaki, Tohru, Osaka-shi, Osaka 542-8502 (JP); Tagami, Masaharu, Osaka-shi, Osaka 542-8502 (JP)
(74) Representative: TBK

(57) **Abstract**

A reduction-transmission mechanism (1) includes: an input member (50) formed of an external gear (50c) that makes circular motion with an eccentric amount; a rotation force applying member (52) formed of an internal gear that is in mesh with the input member; and output members (53) that receive and output rotation force applied to the input member by the rotation force applying member, and that are passed through the respective pin insertion holes (50b). Each of the output members is provided with a needle roller bearing (55) at a portion that is able to contact an inner periphery, which defines a corresponding one of the through-holes, and the input member has third oil supply passages (642) that extend from the center hole to the pin insertion holes, and lubricating oil is supplied to the needle roller bearings through the third oil supply passages by centrifugal force generated in accordance with rotation of the motor shaft.

## Description

### BACKGROUND OF THE INVENTION

### 1. Field of the Invention

The invention relates to a speed reduction mechanism that is suitably used in, for example, an electric vehicle that has an electric motor serving as a driving source, and a motor torque transmission device that includes the speed reduction mechanism.

### 2. Description of Related Art

There is a conventional motor torque transmission device that is mounted in an automobile, and that includes an electric motor that generates motor torque and a reduction-transmission mechanism that reduces the speed of rotation output from the electric motor and transmits driving force to a differential mechanism (for example, see Japanese Patent Application Publication No. 2007-218407 (JP 2007-218407 A).

The electric motor has a motor shaft that is rotated by electric power from an in-vehicle battery. The motor shaft is arranged along the axis of the reduction-transmission mechanism. Eccentric portions are integrally formed on the outer periphery of the motor shaft. The central axis of each eccentric portion is an axis that is offset from the axis of the motor shaft by a predetermined eccentric amount.

The reduction-transmission mechanism has a pair of reduction-transmission units provided around the axis of the reduction-transmission mechanism, and a housing that accommodates the reduction-transmission units. The reduction-transmission mechanism is interposed between the electric motor and the differential mechanism, and is coupled to the motor shaft and the differential mechanism (differential case). One of the reduction-transmission units is coupled to the motor shaft, and the other one of the reduction-transmission units is coupled to the differential case.

With the above configuration, the motor shaft of the electric motor is rotated by electric power from the in-vehicle battery, and accordingly the motor torque is transmitted from the electric motor to the differential mechanism via the reduction-transmission mechanism and then distributed to right and left wheels by the differential mechanism.

The reduction-transmission units of the motor torque transmission device of this type have a pair of disc-shaped revolving members, a plurality of outer pins and a plurality of inner pins. The revolving members make revolving motions in accordance with the rotation of the motor shaft of the electric motor. The outer pins apply rotation force to the revolving members. The inner pins are arranged radially inward of the outer pins, and output the rotation force of the revolving members to the differential mechanism as driving force (torque), and driving force is transmitted to a rotation member at wheel side.

The revolving members each have a center hole and a plurality of pin insertion holes. The revolving members are rotatably supported by the eccentric portions of the motor shaft via bearings (cam-side bearings). The central axis of each center hole coincides with the axis of a corresponding one of the eccentric portions of the motor shaft. The pin insertion holes are arranged at equal intervals around the central axis of each center hole.

The outer pins are arranged at equal intervals around the axis of the motor shaft, and are fitted to the housing of the reduction-transmission mechanism.

The inner pins are passed through the pin insertion holes of the revolving members. The inner pins are arranged at equal intervals on a circle around the axis of the rotation member at wheel side, and are fitted to the differential case. Bearings (pin-side bearings) are fitted to the inner pins. The bearings are used to reduce contact resistance between the inner pins and the inner peripheries which define the pin insertion holes of the revolving members.

However, in the motor torque transmission device described in JP 2007-218407 A, the lubricating oil in the housing is agitated in accordance with high-speed rotation of the electric motor. This may cause a problem that the amount of lubricating oil toward pin-side bearings reduces and the lubricating oil is not sufficiently supplied to the pin-side bearings.

### SUMMARY OF THE INVENTION

It is an object of the invention to provide a speed reduction mechanism in which an amount of lubricating oil supplied to a second bearing is increased to sufficiently supply the lubricating oil to the second bearing, and a motor torque transmission device that includes the speed reduction mechanism.

An aspect of the invention relates to a speed reduction mechanism that includes: an input member formed of an external gear that has a center hole having a central axis that is offset from an axis of a rotary shaft and a plurality of through-holes arranged at equal intervals around the central axis, and that makes circular motion with an eccentric amount that corresponds to a distance between the axis of the rotary shaft and the central axis, an inner periphery of the input member, which defines the center hole, facing an outer periphery of the rotary shaft with a first bearing interposed between the inner periphery of the input member and the outer periphery of the rotary shaft; a rotation force applying member formed of an internal gear that has teeth the number of which is larger than the number of teeth of the external gear, and that is in mesh with the input member; and output members that receive and output rotation force applied to the input member by the rotation force applying member, and that are passed through the respective through-holes. Each of the output members is provided with a second bearing at a portion that is able to contact an inner periphery, which defines a corresponding one of the through-holes. The input member has oil supply passages that extend from the center hole to the through-holes, and lubricating oil is supplied to the second bearings through the oil supply passages by centrifugal force generated in accordance with rotation of the rotary shaft.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a plan view schematically illustrating a vehicle in which a motor torque transmission device according to an embodiment of the invention is mounted;
FIG. 2 is a sectional view illustrating the motor torque transmission device according to the embodiment of the invention;
FIG. 3 is a sectional view schematically illustrating main portions of a reduction-transmission mechanism of the motor torque transmission device according to the embodiment of the invention; and
FIG. 4 is a sectional view that shows an input member, an output member and a second bearing in the reduction-transmission mechanism of the motor torque transmission device according to the embodiment of the invention.

### DETAILED DESCRIPTION OF EMBODIMENTS

Hereinafter, a motor torque transmission device according to an embodiment of the invention will be described in detail with reference to the accompanying drawings.

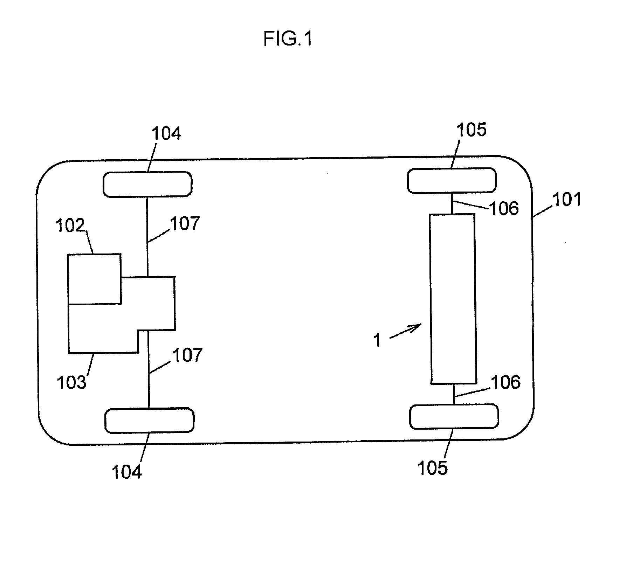

FIG. 1 schematically shows a four-wheel drive vehicle 101. As shown in FIG. 1, the four-wheel drive vehicle 101 has a front wheel power system that uses an engine as a driving source, and a rear wheel power system that uses an electric motor 4 (described later in detail) as a driving source. The four-wheel drive vehicle 101 includes a motor torque transmission device 1, the engine 102, a transaxle 103, a pair of front wheels 104 and a pair of rear wheels 105.

The motor torque transmission device 1 is arranged in the rear wheel power system of the four-wheel drive vehicle 101, and is supported by a vehicle body (not shown) of the four-wheel drive vehicle 101.

The motor torque transmission device 1 is configured to transmit driving force based on the motor torque of the electric motor 4 to the rear wheels 105. Thus, the motor torque of the electric motor 4 is output to rear axle shafts 106 via a reduction-transmission mechanism 5 and a rear differential 3 (both will be described later in detail) to drive the rear wheels 105. The details of the motor torque transmission device 1, and the like, will be described later.

The engine 102 is arranged in the front wheel power system of the four-wheel drive vehicle 101. Thus, the driving force of the engine 102 is output to front axle shafts 107 via the transaxle 103 to drive the front wheels 104.

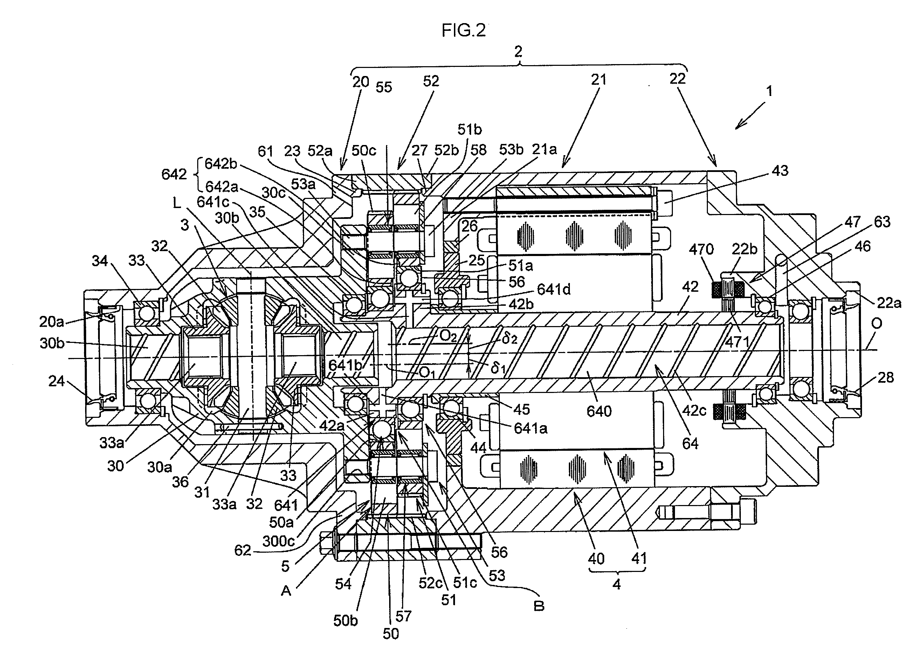

FIG. 2 is an overall view of the motor torque transmission device. As shown in FIG. 2, the motor torque transmission device 1 is formed mainly of a housing 2, the rear differential 3, the electric motor 4 and the reduction-transmission mechanism 5. The axis of the housing 2 is a rotation axis O that coincides with the axis of each rear axle shaft 106 (shown in FIG. 1). The rear differential 3 is a driving force transmission target (i.e., a member to which driving force is transmitted) that distributes driving force based on the motor torque to the rear wheels 105 (shown in FIG. 1). The electric motor 4 generates motor torque for driving the rear differential 3. The reduction-transmission mechanism 5 reduces the speed of rotation output from the electric motor 4 and transmits driving force to the rear differential 3.

The housing 2 has a rotation force applying member 52 (described later in detail), a first housing element 20, a second housing element 21 and a third housing element 22. The housing 2 is arranged on the vehicle body. The first housing element 20 accommodates the rear differential 3. The second housing element 21 accommodates the electric motor 4. The third housing element 22 closes a first opening portion of the second housing element 21 (an opening portion on the opposite side of the second housing element 21 from a first housing element 20-side opening portion (second opening portion)).

The first housing element 20 is arranged at a second side (left side in FIG. 2) of the housing 2. The entirety of the first housing element 20 is formed of a stepped closed-end cylindrical member that is open toward the second housing element 21. The bottom of the first housing element 20 has a shaft insertion hole 20a through which one of the rear axle shafts 106 (shown in FIG. 1) is passed. An annular protrusion 23 that protrudes toward the second housing element 21 is formed integrally on the open end face of the first housing element 20. The outer periphery of the protrusion 23 has an outside diameter smaller than the maximum outside diameter of the first housing element 20, and is formed of a cylindrical surface of which the central axis coincides with the rotation axis O. A seal member 24 is interposed between the inner periphery of the first housing element 20 and the outer periphery of the rear axle shaft 106. The seal member 24 seals the shaft insertion hole 20a.

The second housing element 21 is arranged at the middle of the housing 2 in the axial direction. The entirety of the second housing element 21 is formed of an open-end cylindrical member that is open toward both sides in the direction of the rotation axis O. A stepped inward flange 21a, which is interposed between the electric motor 4 and the reduction-transmission mechanism 5, is formed integrally with the second opening portion of the second housing element 21 (the opening portion on the first housing element 20-side). An annular member 25, to which a race is fitted, is fitted to the inner periphery of the inward flange 21a via an annular spacer 26. An annular protrusion 27, which protrudes toward the first housing element 20, is formed integrally on the second open end face of the second housing element 21 (the open end face on the first housing element 20-side). The outer periphery of the protrusion 27 has an outside diameter smaller than the maximum outside diameter of the second housing element 21. The protrusion 27 has substantially the same outside diameter as the outside diameter of the protrusion 23. The outer periphery of the protrusion 27 is formed of a cylindrical surface of which the central axis coincides with the rotation axis O.

The third housing element 22 is arranged at the first side (right side in FIG. 2) of the housing 2. The entirety of the third housing element 22 is formed of a stepped closed-end cylindrical member that is open toward the second housing element 21. The bottom of the third housing element 22 has a shaft insertion hole 22a through which the other one of the rear axle shafts 106 is passed. A cylindrical portion 22b, which protrudes toward the electric motor 4 and to which a stator is fitted, is formed integrally with the third housing element 22 so as to surround the inner opening of the shaft insertion hole 22a. A seal member 28 that seals the shaft insertion hole 22a is interposed between the inner periphery of the third housing element 22 and the outer periphery of the rear axle shaft 106.

The rear differential 3 is formed of a bevel gear differential mechanism that includes a differential case 30, a pinion gear shaft 31, a pair of pinion gears 32 and a pair of side gears 33. The rear differential 3 is arranged at the second side of the motor torque transmission device 1.

Thus, the torque of the differential case 30 is distributed from the pinion gear shaft 31 to the side gears 33 via the pinion gears 32, and further transmitted from the rear axle shafts 106 (shown in FIG. 1) to the right and left rear wheels 105 (shown in FIG. 1).

When there arises a difference in driving resistance between the right and left rear wheels 105, the torque of the differential case 30 is differentially distributed to the right and left rear wheels 105 by the rotations of the pinion gears 32.

The differential case 30 is arranged on the rotation axis O. The differential case 30 is rotatably supported by the first housing element 20 via a ball bearing 34, and is rotatably supported by a motor shaft (rotary shaft) 42 of the electric motor 4 via a ball bearing 35. The differential case 30 is configured to rotate about the rotation axis O upon reception of driving force based on the motor torque of the electric motor 4 from the reduction-transmission mechanism 5.

The differential case 30 has an accommodation space 30a and a pair of shaft insertion holes 30b. A differential mechanism unit (the pinion gear shaft 31, the pinion gears 32 and the side gears 33) is accommodated in the accommodation space 30a. The shaft insertion holes 30b communicate with the accommodation space 30a, and the right and left rear axle shafts 106 are passed through the shaft insertion holes 30b.

An annular flange 30c that faces the reduction-transmission mechanism 5 is formed integrally with the differential case 30. The flange 30c has a plurality of (six in the present embodiment) pin fitting holes 300c that are arranged at equal intervals around the rotation axis O.

The pinion gear shaft 31 is arranged along an axis L perpendicular to the rotation axis O in the accommodation space 30a of the differential case 30. Rotation of the pinion gear shaft 31 about the axis L and movement of the pinion gear shaft 31 in the direction of the axis L are restricted by a pin 36.

The pinion gears 32 are rotatably supported by the pinion gear shaft 31, and are accommodated in the accommodation space 30a of the differential case 30.

The side gears 33 each have a shaft coupling hole 33a in which a corresponding one of the rear axle shafts 106 (shown in FIG. 1) is spline-coupled. The side gears 33 are accommodated in the accommodation space 30a of the differential case 30. The side gears 33 are configured such that the gear axes are perpendicular to the gear axes of the pinion gears 32 and the side gears 33 are in mesh with the pinion gears 32.

The electric motor 4 includes a stator 40, a rotor 41 and the motor shaft 42, and is coupled, on the rotation axis O, to the rear differential 3 via the reduction-transmission mechanism 5. The stator 40 is connected to an electronic control unit (ECU) (not shown). The electric motor 4 is configured such that the stator 40 receives a control signal from the ECU, motor torque for driving the rear differential 3 is generated with the use to the stator 40 and the rotor 41, and the rotor 41 is rotated together with the motor shaft 42.

The stator 40 is arranged at the outer peripheral side of the electric motor 4, and is fitted to the inward flange 21a of the second housing element 21 with a fitting bolt 43.

The rotor 41 is arranged at the inner peripheral side of the electric motor 4, and is fitted to the outer periphery of the motor shaft 42.

The motor shaft 42 is arranged on the rotation axis O. In addition, the second end portion of the motor shaft 42 is rotatably supported by the inner periphery of the annular member 25 via a ball bearing 44 and a sleeve 45, and the first end portion of the motor shaft 42 is rotatably supported by the inner periphery of the third housing element 22 via a ball bearing 46. The entirety of the motor shaft 42 is formed of a cylindrical (hollow) shaft member through which the rear axle shafts 106 (shown in FIG. 1) is passed.

An eccentric portion 42a and an eccentric portion 42b, both of which are circular in planar view, are formed integrally with the second end portion of the motor shaft 42. The central axis of the eccentric portion 42a is an axis O₁ that is offset from the axis of the motor shaft 42 (rotation axis O) by an eccentric amount δ₁. The central axis of the eccentric portion 42b is an axis O₂ that is offset from the rotation axis O by an eccentric amount δ₂ (δ₁ = δ₂ = δ). The eccentric portion 42a and the eccentric portion 42b are arranged so as to be next to each other along the rotation axis O and apart from each other in the circumferential direction around the rotation axis O at equal intervals (180°). That is, the eccentric portion 42a and the eccentric portion 42b are arranged on the outer periphery of the motor shaft 42 such that the distance from the axis O₁ to the rotation axis O and the distance from the axis O₂ to the rotation axis O are equal to each other and the distance between the axis O₁ and the axis O₂ in one of the circumferential directions around the rotation axis O and the distance between the axis O₂ and the axis O₁ in the other circumferential direction around the rotation axis O are equal to each other.

A resolver 47 is arranged at the first end portion of the motor shaft 42. The resolver 47 serves as a rotation angle detector, and is interposed between the outer periphery of the motor shaft 42 and the inner periphery of the cylindrical portion 22b. The resolver 47 has a stator 470 and a rotor 471, and is accommodated inside the third housing element 22. The stator 470 is fitted to the inner periphery of the cylindrical portion 22b. The rotor 471 is fitted to the outer periphery of the motor shaft 42.

A spiral groove 42c is formed in the inner periphery of the motor shaft 42. Through the groove 42c, lubricating oil is supplied from the first opening portion on the resolver 47-side (right side in FIG. 2) to the second opening portion on the rear differential 3-side (left side in FIG. 2) as the motor shaft 42 rotates.

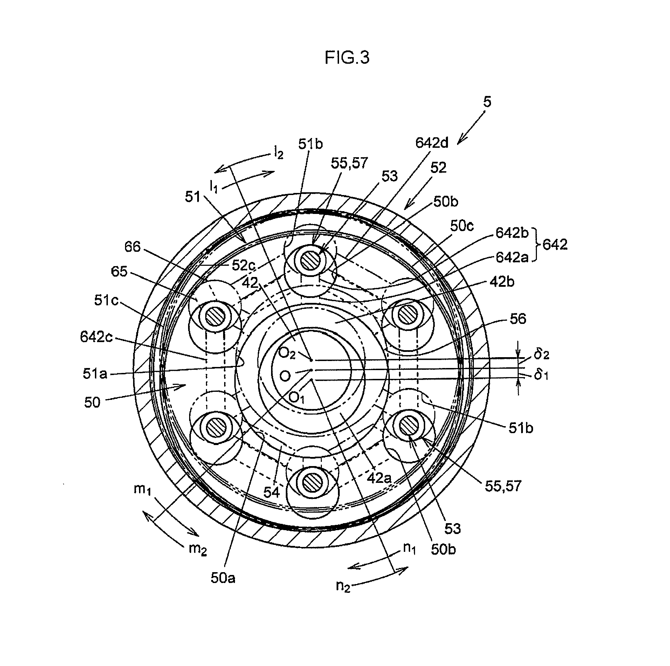

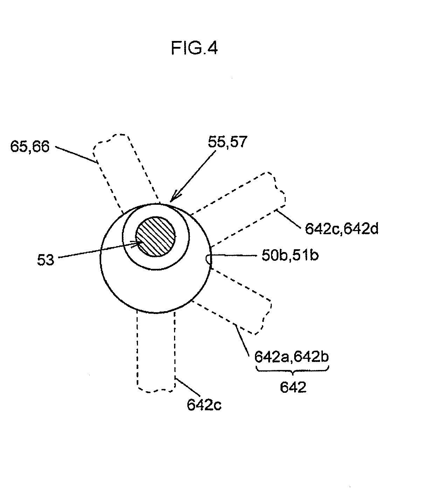

FIG. 3 shows the reduction-transmission mechanism. FIG. 4 shows part of oil supply passages. As shown in FIG. 2 and FIG. 3, the reduction-transmission mechanism 5 includes a speed reduction unit A and a lubricating oil supply unit B. The reduction-transmission mechanism 5 is interposed between the rear differential 3 and the electric motor 4.

The speed reduction unit A has a pair of input members 50, 51, the rotation force applying member 52 and output members 53. The speed reduction unit A is configured to reduce the speed of rotation output from the electric motor 4 and output driving force to the rear differential 3.

The input member 50 is formed of an external gear that has a center hole 50a of which the central axis coincides with the axis O₁. The input member 50 is arranged so as to be closer to the rear differential 3 than the input member 51. In addition, the input member 50 is rotatably supported by the motor shaft 42 via a ball bearing (deep groove ball bearing) 54. The ball bearing 54 serves as a first bearing (input-side bearing), and is interposed between the inner periphery of the input member 50, which defines the center hole 50a, and the eccentric portion 42a. The input member 50 is configured to make circular motion (revolving motion about the rotation axis O) in the directions of the arrows m₁, m₂ with the eccentric amount δ, upon reception of motor torque from the electric motor 4. The ball bearing 54 includes an inner ring 540 and an outer ring 541 that serve as two races, and rolling elements 542. The inner ring 540 is arranged radially inward of the outer ring 541. The rolling elements 542 roll between the inner ring 540 and the outer ring 541.

The input member 50 has a plurality of (six in the present embodiment) pin insertion holes (through-holes) 50b that are arranged at equal intervals around the axis O₁. The hole diameter of each pin insertion hole 50b is set to a value that is larger than a value obtained by adding the outside diameter of a needle roller bearing 55, which serves as a second bearing, to the outside diameter of each output member 53. External teeth 50c, having an involute tooth profile, are formed on the outer periphery of the input member 50, of which the central axis coincides with the axis O₁. The number Z₁ of the external teeth 50c is set to 195 (Z₁ = 195), for example. The outside diameter of each needle roller bearing 55 is set to a value that is smaller than the outside diameter of the ball bearing 54.

The input member 51 is formed of an external gear that has a center hole 51a of which the central axis coincides with the axis O₂. The input member 51 is arranged so as to be closer to the electric motor 4 than the input member 50. In addition, the input member 51 is rotatably supported by the motor shaft 42 via a ball bearing 56. The ball bearing 56 serves as the first bearing (input-side bearing), and is interposed between the inner periphery of the second input member 51, which defines the center hole 51a, and the eccentric portion 42b. The input member 51 is configured to make circular motion (revolving motion about the rotation axis O) in the directions of the arrows m₁, m₂ with the eccentric amount δ, upon reception of motor torque from the electric motor 4. The ball bearing 56 includes an inner ring 560 and an outer ring 561 that serve as two races, and rolling elements 562. The inner ring 560 is arranged radially inward of the outer ring 561. The rolling elements 562 roll between the inner ring 560 and the outer ring 561.

The input member 51 has a plurality of (six in the present embodiment) pin insertion holes (through-holes) 51b that are arranged at equal intervals around the axis O₂. The hole diameter of each pin insertion hole 51b is set to a value that is larger than a value obtained by adding the outside diameter of a needle roller bearing 57, which serves as the second bearing, to the outside diameter of each output member 53. External teeth 51c, having an involute tooth profile, are formed on the outer periphery of the input member 51 of which the central axis coincides with the axis O₂. The number Z₂ (Z₂ = Z₁) of the external teeth 51c is set to 195, for example. The outside diameter of each needle roller bearing 57 is set to a value that is smaller than the outside diameter of the ball bearing 56.

The rotation force applying member 52 is formed of an internal gear of which the central axis coincides with the rotation axis O. The rotation force applying member 52 is interposed between the first housing element 20 and the second housing element 21. The entirety of the rotation force applying member 52 is formed of an open-end cylindrical member that constitutes part of the housing 2 and that is open toward both sides in the direction of the rotation axis O. The rotation force applying member 52 is in mesh with the input members 50, 51. The rotation force applying member 52 is configured to apply rotation force in the direction of the arrow n₁ to the input member 50 that makes revolving motion upon reception of motor torque from the electric motor 4, and to apply rotation force in the direction of the arrow l₁ to the input member 51 that makes revolving motion upon reception of motor torque from the electric motor 4.

The inner periphery of the rotation force applying member 52 has a first fitting portion 52a and a second fitting portion 52b that are located at a predetermined distance in the direction of the rotation axis O. The first fitting portion 52a is fitted to the outer periphery of the protrusion 23. The second fitting portion 52b is fitted to the outer periphery of the protrusion 27. In addition, the inner periphery of the rotation force applying member 52 has internal teeth 52c having an involute tooth profile. The internal teeth 52c are located between the first fitting portion 52a and the second fitting portion 52b. The external teeth 50c of the input member 50 and the external teeth 51c of the input member 51 are in mesh with the internal teeth 52c. The number Z₃ of the internal teeth 52c is set to 208, for example. Thus, the reduction gear ratio α of the reduction-transmission mechanism 5 is calculated according to an equation, α = Z₂/ (Z₃-Z₂).

The output members 53 are a plurality of (six in the present embodiment) bolts each having a threaded portion 53a at one end and a head 53b at the other end. The threaded portions 53a of the output members 53 are passed through the pin insertion holes 50b of the input member 50 and the pin insertion holes 51b of the input member 51 and then fitted in the pin fitting holes 300c of the differential case 30. In addition, the output members 53 are arranged so as to be passed through an annular spacer 58 that is interposed between each head 53b and the input member 51. The output members 53 are configured to receive rotation force, applied by the rotation force applying member 52, from the input members 50, 51 and output the rotation force to the differential case 30 as the torque of the differential case 30.

The needle roller bearing 55 is fitted to the outer periphery of each output member 53 at a portion between the threaded portion 53a and the head 53b. The needle roller bearing 55 is used to reduce contact resistance between each output member 53 and the inner periphery, which defines the corresponding pin insertion hole 50b of the input member 50. In addition, the needle roller bearing 57 is fitted to the outer periphery of each output member 53 at a portion between the threaded portion 53a and the head 53b. The needle roller bearing 57 is used to reduce contact resistance between each output member 53 and the inner periphery, which defines the corresponding pin insertion hole 51b of the input member 51.

The needle roller bearings 55 each have a race 550 and needle rollers 551. The race 550 is able to contact the inner periphery, which defines a corresponding one of the pin insertion holes 50b of the input member 50. The needle rollers 551 roll between the race 550 and the outer periphery of a corresponding one of the output members 53. The needle roller bearings 57 each have a race 570 and needle rollers 571. The race 570 is able to contact the inner periphery, which defines a corresponding one of the pin insertion holes 51b of the input member 51. The needle rollers 571 roll between the race 570 and the outer periphery of a corresponding one of the output members 53.

The lubricating oil supply unit B includes an oil tank (not shown), oil delivery passages 61, 62, an oil introduction passage 63, an oil supply passage 64 and oil drain passages 65, 66. The lubricating oil supply unit B is formed in the housing 2. The lubricating oil supply unit B is configured such that the lubricating oil is supplied to the ball bearings 54, 56, and the like, through the oil supply passage 64 by centrifugal force generated in accordance with the rotation of the motor shaft 42.

The oil delivery passages 61, 62 are open toward the inside and outside of the housing 2, and communicate with the oil tank via tube members (not shown). The oil delivery passages 61, 62 are formed in the first housing element 20 at equal intervals around the rotation axis O. The oil delivery passages 61, 62 are configured such that, through the delivery passages 61, 62, the lubricating oil inside the housing 2 is delivered to the outside of the housing 2 and the lubricating oil is caused to flow toward the oil tank with the use of, for example, a pump.

The oil introduction passage 63 functions as an oil passage that extends from the oil tank to the oil supply passage 64, and is formed in the third housing element 22 with a portion thereof exposed on the outside of the housing 2. The oil introduction passage 63 is configured such that the lubricating oil in the oil tank flows through the oil introduction passage 63 to be introduced into the oil supply passage 64.

The oil supply passage 64 has a first oil supply passage 640, a second oil supply passage 641 and a third oil supply passage 642. The oil supply passage 64 is formed in the motor shaft 42 and the input members 50, 51.

The first oil supply passage 640 communicates with the groove 42c of the motor shaft 42, and functions as an oil passage that extends from the oil introduction passage 63 to the second oil supply passage 641. The first oil supply passage 640 is formed in the motor shaft 42.

The second oil supply passage 641 has, for example, oil flow passages 641a to 641d. The second oil supply passage 641 is formed in the eccentric portions 42a, 42b and the motor shaft 42. The oil flow passages 641a, 641b are formed in the motor shaft 42 and the eccentric portion 42a, and the oil flow passages 641c, 641d are formed in the motor shaft 42 and the eccentric portion 42b.

The oil flow passage 641a is formed of a flow passage through which the lubricating oil flows from the motor shaft 42 toward the ball bearing 54. The oil flow passage 641b is formed of a flow passage through which the lubricating oil flows from the oil flow passage 641a toward the ball bearings 35, 56.

The oil flow passage 641c is formed of a flow passage through which the lubricating oil flows from the motor shaft 42 toward the ball bearing 56. The oil flow passage 641d is formed of a flow passage through which the lubricating oil flows from the oil flow passage 641c toward the ball bearings 44, 56.

The third oil supply passage 642 has, for example, oil flow passage 642a, 642b. The third oil supply passage 642 is formed in the input members 50, 51. The oil flow passage 642a is formed in the input member 50, and the oil flow passage 642b is formed in the input member 51.

The oil flow passage 642a is formed of flow passages that extend from the center hole 50a to the pin insertion holes 50b. The oil flow passage 642b is formed of flow passages that extend from the center hole 51a to the pin insertion holes 51b. By centrifugal force generated in accordance with the rotation of the motor shaft 42, the lubricating oil is caused to flow through the oil flow passage 642a to be supplied to spaces between the inner peripheries, which define the pin insertion holes 50b, and the needle roller bearings 55. By centrifugal force generated in accordance with the rotation of the motor shaft 42, the lubricating oil is caused to flow through the oil flow passage 642b to be supplied to spaces between the inner peripheries, which define the pin insertion holes 51b, and the needle roller bearings 57.

The oil flow passage 642a communicates with a communication passage 642c via the pin insertion holes 50b. The oil flow passage 642a is formed in the input member 50. The communication passage 642c is formed of oil passages each of which communicate with two adjacent pin insertion holes among the pin insertion holes 50b.

The oil flow passage 642b communicates with a communication passage 642d via the pin insertion holes 51b. The oil flow passage 642b is formed in the input member 51. The communication passage 642d is formed of oil passages each of which communicate with two adjacent pin insertion holes among the pin insertion holes 51b.

The oil drain passage 65 is open at the outer periphery of the input member 50 and the inner periphery that defines one of the pin insertion holes 50b, and is formed in the input member 50. The oil drain passage 65 is configured such that the lubricating oil in the pin insertion hole 50b is caused to flow to the radially outer side of the input member 50 by pumping action generated in accordance with the rotation of the corresponding output member 53, and then flow toward the internal teeth 52c of the rotation force applying member 52 and, consequently, toward a meshing section between the internal teeth 52c and the external teeth 50c of the input member 50. In the present embodiment, the case where the oil drain passage 65 communicates with only one of the pin insertion holes 50b is described. However, the invention is not limited to this configuration. For example, the oil drain passage 65 may communicate with two or more or all of the pin insertion holes 50b.

The oil drain passage 66 is open at the outer periphery of the input member 51 and the inner periphery that defines one of the pin insertion holes 51b. The oil drain passage 66 is formed in the input member 51. The oil drain passage 66 is configured such that the lubricating oil in the pin insertion hole 51b is caused to flow to the radially outer side of the input member 51 by pumping action generated in accordance with the rotation of the corresponding output member 53, and then flow toward the internal teeth 52c of the rotation force applying member 52 and, consequently, toward a meshing section between the internal teeth 52c and the external teeth 51c of the input member 51. In the present embodiment, the case where the oil drain passage 66 communicates with only one of the pin insertion hole 51b is described. However, the invention is not limited to this configuration. For example, the oil drain passage 66 may communicate with two or more or all of the pin insertion holes 50b.

Next, the operation of the motor torque transmission device according to the present embodiment will be described with reference to FIG. 1 to FIG. 4. Referring to FIG. 2, when electric power is supplied to the electric motor 4 of the motor torque transmission device 1 to drive the electric motor 4, the motor torque of the electric motor 4 is applied to the reduction-transmission mechanism 5 via the motor shaft 42. Thus, the reduction-transmission mechanism 5 is driven.

Therefore, in the reduction-transmission mechanism 5, the input members 50, 51 each make circular motion with the eccentric amount δ, for example, in the direction of the arrow m₁ shown in FIG. 3.

Accordingly, the input member 50 rotates about the axis O₁ (in the direction of the arrow n₁ shown in FIG. 3) while the external teeth 50c are meshed with the internal teeth 52c of the rotation force applying member 52, and the input member 51 rotates about the axis O₂ (in the direction of the arrow l₁ shown in FIG. 3) while the external teeth 51c are meshed with the internal teeth 52c of the rotation force applying member 52. In this case, due to the rotation of the input members 50, 51, the inner peripheries, which define the pin insertion holes 50b, contact the races 550 of the corresponding needle roller bearings 55, and the inner peripheries, which define the pin insertion holes 51b, contact the races 570 of the corresponding needle roller bearings 57.

Therefore, the revolving motions of the input members 50, 51 are not transmitted to the output members 53 and only the rotation motions of the input members 50, 51 are transmitted to the output members 53. Rotation force resulting from the rotation motions is output from the output members 53 to the differential case 30 as the torque of the differential case 30.

Thus, the rear differential 3 is driven, and driving force based on the motor torque of the electric motor 4 is distributed to the rear axle shafts 106 shown in FIG. 1 and transmitted to the right and left rear wheels 105.

In the motor torque transmission device 1, as the electric motor 4 (the motor shaft 42) rotates, the lubricating oil in the motor shaft 42 (the first oil supply passage 640), introduced from the oil introduction passage 63, is supplied toward the second oil supply passage 641 in accordance with this rotation, and centrifugal force occurs in the lubricating oil in the first oil supply passage 640.

Therefore, the lubricating oil is supplied from the first oil supply passage 640 to the ball bearings 35, 54, 56 via the oil flow passages 641a, 641b of the second oil supply passage 641, and the lubricating oil is further supplied from the ball bearings 54, 56 to the needle roller bearings 55 in the pin insertion holes 50b via the oil flow passage 642a, 642b of the third oil supply passage 642.

Similarly, the lubricating oil is supplied from the first oil supply passage 640 to the ball bearings 44, 54, 56 via the oil flow passages 641c, 641d of the second oil supply passage 641, and is further supplied from the ball bearings 54, 56 to the needle roller bearings 57 in the pin insertion holes 51b via the oil flow passage 642a, 642b of the third oil supply passage 642.

Thus, in the present embodiment, the lubricating oil is supplied to the needle roller bearings 55, 57 by centrifugal force generated in accordance with the rotation of the motor shaft 42 to thereby to increase the amount of lubricating oil supplied to the needle roller bearings 55, 57. In this case, because any adjacent two pin insertion holes among the pin insertion holes 50b are communicated with each other by the communication passage 642c and any adjacent two pin insertion holes among the pin insertion holes 51b are communicated with each other by the communication passage 642d, the lubricating oil is allowed to flow between the adjacent two pin insertion holes via the corresponding communication passage. Therefore, excess lubricating oil for each pin insertion hole is allowed to flow to the adjacent pin insertion hole.

During rotation of the output members 53, pumping action occurs between the outer peripheries of the outer rings of the needle roller bearings 55, 57 and the inner peripheries that define the pin insertion holes 50b, 51b due to the rotation of the output members 53.

Therefore, the lubricating oil supplied to the needle roller bearings 55 (the pin insertion holes 50b) flows through the oil drain passage 65 and flows to a position between the input member 50 and the rotation force applying member 52, and is supplied to the internal teeth 52c of the rotation force applying member 52 and, consequently, to the meshing section between the internal teeth 52c of the rotation force applying member 52 and the external teeth 50c of the input member 50.

Similarly, the lubricating oil supplied to the needle roller bearings 57 (the insides of the pin insertion holes 51b) flows through the oil drain passage 66 and flows to a position between the input member 51 and the rotation force applying member 52, and is supplied to the internal teeth 52c of the rotation force applying member 52 and, consequently, to the meshing section between the internal teeth 52c of the rotation force applying member 52 and the external teeth 51c of the input member 51.

Thus, in the present embodiment, it is possible to lubricate the meshing sections between the internal teeth 52c of the rotation force applying member 52 and the input members 50, 51.

Note that, in the above embodiment, the case where the input members 50, 51 are caused to make circular motions in the direction of the arrow m₁ to drive the motor torque transmission device 1 is described. Alternatively, the motor torque transmission device 1 may be driven as in the case of the above embodiment even when the input members 50, 51 are caused to make circular motions in the direction of the arrow m2. In this case, the rotation motion of the input member 50 is made in the direction of the arrow n₂, and the rotation motion of the input member 51 is made in the direction of the arrow l₂.

According to the above described embodiment, the following advantageous effects are obtained.

(1) The amount of lubricating oil supplied to the needle roller bearings 55, 57 is increased, and it is possible to sufficiently supply the lubricating oil to the needle roller bearings 55, 57.

(2) The lubricating oil is supplied from the pin insertion holes 50b, 51b to the meshing sections between the internal teeth 52c of the rotation force applying member 52 and the external teeth 50c, 51c of the input members 50, 51, and it is possible to lubricate these meshing sections.

As described above, the speed reduction mechanism according to the invention and the motor torque transmission device that includes the speed reduction mechanism are described on the basis of the above embodiment. However, the invention is not limited to the above embodiment. The invention may be implemented in various forms without departing from the scope of the invention, and, for example, the invention may be implemented in the following alternative embodiments.

(1) In the above embodiment, the eccentric portion 42a and the eccentric portion 42b are arranged on the outer periphery of the motor shaft 42 such that the distance from the axis O₁ of the center hole 50a to the rotation axis O and the distance from the axis O₂ of the center hole 51a to the rotation axis O are equal to each other and the distance between the axis O₁ of the center hole 50a and the axis O₂ of the center hole 51a in one of the circumferential directions around the rotation axis O and the distance between the axis O₂ of the center hole 51a and the axis O₁ of the center hole 50a in the other circumferential direction around the rotation axis O are equal to each other. The above description is made on the case where the input members 50, 51 are arranged on the portions that are formed on the motor shaft 42 of the electric motor 4 so as to be apart from each other in the circumferential direction around the axis of the motor shaft 42 (rotation axis O) at equal intervals (180°). However, the invention is not limited to this configuration, and the number of the input members may be changed as needed.

That is, when the number of the input members is n (n ≥ 3), the axis of the first eccentric portion, the axis of the second eccentric portion, ..., and the axis of the nth eccentric portion are successively arranged in one direction about the axis of the motor shaft in an imaginary plane perpendicular to the axis of the electric motor (motor shaft). Then, the eccentric portions are arranged around the motor shaft such that the distance from the axis of each eccentric portion to the axis of the motor shaft is equal to one another and an angle formed between line segments that connect the axis of the motor shaft to the respective axes of any adjacent two eccentric portions among the first eccentric portion, the second eccentric portion, ..., and the nth eccentric portion is set to 360°/n. Furthermore, the n input members are arranged on the motor shaft at portions that are spaced at intervals of 360°/n about the axis of the motor shaft.

For example, when the number of the input members is three, the axis of the first eccentric portion, the axis of the second eccentric portion and the axis of the third eccentric portion are successively arranged in one direction around the axis of the motor shaft in an imaginary plane perpendicular to the axis of the motor shaft. The eccentric portions are arranged around the motor shaft such that the distance from the axis of each eccentric portion to the axis of the motor shaft is equal to one another and an angle formed between line segments that connect the axis of the motor shaft to the respective axes of any adjacent two eccentric portions among the first eccentric portion, the second eccentric portion and the third eccentric portion is set to 120°. Furthermore, the three input members are arranged on the motor shaft at portions that are spaced at intervals of 120° about the axis of the motor shaft.

(2) In the above embodiment, the case where the invention is applied to the four-wheel drive vehicle 101 that uses both the engine 102 and the electric motor 4 as the driving sources is described. However, the invention is not limited to this configuration. The invention may also be applied to an electric vehicle, which is a four-wheel drive vehicle or a two-wheel drive vehicle, using only an electric motor as a driving source. In addition, the invention may also be applied to a four-wheel drive vehicle that has a first drive shaft driven by an engine and an electric motor and a second drive shaft driven by an electric motor, as in the case of the above embodiment.

(3) In the above embodiment, the case where rotation force is applied to the input members 50, 51 through the meshing between the external teeth 50c, 51c and the internal teeth 52c is described. However, the invention is not limited to this configuration. As is described in JP 2007-218407 A, rotation force may be applied to the input members through engagement between the curved waveform portions of curved plates (revolving members), which serve as the input members, and outer pins.

(4) In the above embodiment, the description is made on the case where the ball bearings 54, 56, which are deep groove ball bearings, are used as the first bearings and provided between the inner peripheries, which define the center holes 50a, 51a of the input members 50, 51, and the outer peripheries of the eccentric portions 42a, 42b such that the input members 50, 51 are rotatably supported on the eccentric portions 42a, 42b. However, the invention is not limited to this configuration. Ball bearings other than deep groove ball bearings or roller bearings may be used as the first bearings, instead of the deep groove ball bearings. Such a ball bearing or a roller bearing may be, for example, an angular contact ball bearing, a needle roller bearing, a long cylindrical roller bearing, a cylindrical roller bearing, a tapered roller bearing, a spherical roller bearing, or the like. In addition, the first bearing according to the invention may be a plain bearing instead of a rolling bearing.

(5) In the above embodiment, the description is made on the case where the needle roller bearing 55 that serves as the second bearing and that is able to contact the inner periphery, which defines a corresponding one of the pin insertion holes 50b of the input member 50, is fitted to the outer periphery of each of the output members 53 at a portion between the threaded portion 53a and the head 53b, and the needle roller bearing 57 that serves as the second bearing and that is able to contact the inner periphery, which defines a corresponding one of the pin insertion holes 51b of the input member 51, is fitted to the outer periphery of each of the output members 53 at a portion between the threaded portion 53a and the head 53b. However, the invention is not limited to this configuration. A roller bearing other than a needle roller bearing or a ball bearing may be used instead of the needle roller bearing. Such a ball bearing or a roller bearing may be, for example, a deep groove ball bearing, an angular contact ball bearing, a cylindrical roller bearing, a long cylindrical roller bearing, a tapered roller bearing, a spherical roller bearing, or the like. In addition, the second bearing according to the invention may be a plain bearing instead of a rolling bearing.

According to the invention, the amount of lubricating oil supplied to the second bearings is increased, and it is possible to sufficiently supply the lubricating oil to the second bearings.
A reduction-transmission mechanism includes: an input member formed of an external gear that makes circular motion with an eccentric amount; a rotation force applying member formed of an internal gear that is in mesh with the input member; and output members that receive and output rotation force applied to the input member by the rotation force applying member, and that are passed through the respective pin insertion holes. Each of the output members is provided with a needle roller bearing at a portion that is able to contact an inner periphery, which defines a corresponding one of the through-holes, and the input member has third oil supply passages that extend from the center hole to the pin insertion holes, and lubricating oil is supplied to the needle roller bearings through the third oil supply passages by centrifugal force generated in accordance with rotation of the motor shaft.

## Claims

1. A speed reduction mechanism, comprising:
an input member formed of an external gear that has a center hole having a central axis that is offset from an axis of a rotary shaft and a plurality of through-holes arranged at equal intervals around the central axis, and that makes circular motion with an eccentric amount that corresponds to a distance between the axis of the rotary shaft and the central axis, an inner periphery of the input member, which defines the center hole, facing an outer periphery of the rotary shaft with a first bearing interposed between the inner periphery of the input member and the outer periphery of the rotary shaft;
a rotation force applying member formed of an internal gear that has teeth the number of which is larger than the number of teeth of the external gear, and that is in mesh with the input member; and
output members that receive and output rotation force applied to the input member by the rotation force applying member, and that are passed through the respective through-holes, wherein
each of the output members is provided with a second bearing at a portion that is able to contact an inner periphery, which defines a corresponding one of the through-holes, and
the input member has oil supply passages that extend from the center hole to the through-holes, and lubricating oil is supplied to the second bearings through the oil supply passages by centrifugal force generated in accordance with rotation of the rotary shaft.

2. The speed reduction mechanism according to claim 1, wherein the input member has a communication passage that communicates with adjacent two through-holes among the through-holes.

3. The speed reduction mechanism according to claim 1, wherein the input member has an oil drain passage that is open at an outer periphery of the input member and at least one of the inner peripheries that define the through-holes.

4. The speed reduction mechanism according to claim 2, wherein the input member has an oil drain passage that is open at an outer periphery of the input member and at least one of the inner peripheries that define the through-holes.

5. A motor torque transmission device, comprising:
an electric motor that generates motor torque; and
a reduction-transmission mechanism that reduces a speed of rotation output from the electric motor, and that transmits driving force to a driving force transmission target, wherein the reduction-transmission mechanism is the speed reduction mechanism according to claim 1.

6. A motor torque transmission device, comprising:
an electric motor that generates motor torque; and
a reduction-transmission mechanism that reduces a speed of rotation output from the electric motor, and that transmits driving force to a driving force transmission target, wherein the reduction-transmission mechanism is the speed reduction mechanism according to claim 2.

7. A motor torque transmission device, comprising:
an electric motor that generates motor torque; and
a reduction-transmission mechanism that reduces a speed of rotation output from the electric motor, and that transmits driving force to a driving force transmission target, wherein the reduction-transmission mechanism is the speed reduction mechanism according to claim 3.

8. A motor torque transmission device, comprising:
an electric motor that generates motor torque; and
a reduction-transmission mechanism that reduces a speed of rotation output from the electric motor, and that transmits driving force to a driving force transmission target, wherein the reduction-transmission mechanism is the speed reduction mechanism according to claim 4.

9. The motor torque transmission device according to claim 5, wherein the reduction-transmission mechanism transmits the driving force to a differential mechanism that serves as the driving force transmission target.

10. The motor torque transmission device according to claim 6, wherein the reduction-transmission mechanism transmits the driving force to a differential mechanism that serves as the driving force transmission target.
